(19) Europäisches Patentamt
European Patent Office
Office européen des brevets

(11) Publication number: **0 230 248 A1**

(12) **EUROPEAN PATENT APPLICATION**

(21) Application number: **87100298.6**

(51) Int. Cl.[4]: **C07F 7/18**

(22) Date of filing: **13.01.87**

(30) Priority: **14.01.86 JP 5636/86**

(43) Date of publication of application: **29.07.87 Bulletin 87/31**

(84) Designated Contracting States: **BE CH DE ES FR GB IT LI NL SE**

(71) Applicant: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Ohashi, Takehisa**
**9-14, Obanoyama-cho 3-chome, Shinohara**
**Nada-ku**
**Kobe-shi Hyogo-ken(JP)**
Inventor: **Kan, Kazunori**
**9-30-616, Maikodai 2-chome Tarumi-ku**
**Kobe-shi Hyogo-ken(JP)**
Inventor: **Ueyama, Noboru**
**61-8,Mizonokuchi Kakogawa-cho,**
**Kakogawa-shi, Hyogo-ken(JP)**
Inventor: **Sada, Isao**
**1459-1, Fujie**
**Akashi-shi Hyogo-ken(JP)**
Inventor: **Watanabe, Kiyoshi**
**15-41, Matsugaoka 5-chome**
**Akashi-shi Hyogo-ken(JP)**

(74) Representative: **Türk, Gille, Hrabal**
**Bruckner Strasse 20**
**D-4000 Düsseldorf 13(DE)**

(54) **Beta-lactam compound and process for preparing the same.**

(57) A β-lactam compound having the formula (I):

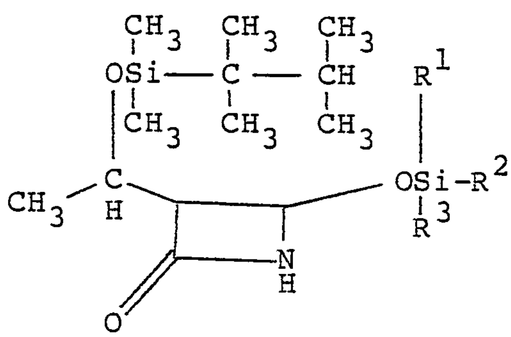

(I)

EP 0 230 248 A1

Xerox Copy Centre

wherein $R^1$, $R^2$ and $R^3$ are a member selected from the group consisting of a lower alkyl group having l to 6 carbon atoms, phenyl group and an aralkyl group, a process for preparing the same, which comprises reacting an enolsilylether having the formula (II):

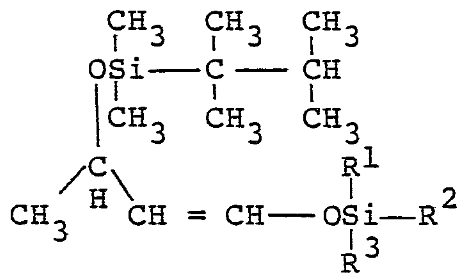

(II)

wherein $R^1$, $R^2$ and $R^3$ are as defined above, with chlorosulfonylisocyanate and then reducing the obtained product. The $\beta$-lactam compound of the present invention is a useful intermediate for preparing carbapenem $\beta$-lactam compound.

# β-LACTAM COMPOUND AND PROCESS FOR PREPARING THE SAME

The present invention relates to a β-lactam compound having a hydroxyethyl group at the C3-position, wherein the hydroxyl group is protected by dimethyl-l,l,2-trimethylpropylsilyl group and having a silylether group at the C4-position, and a process for preparing the compounds.

Since the β-lactam compound of the present invention has a highly reactive silylether group at the C4-position, the β-lactam compound is a useful intermediate which can be converted into various derivatives. For instance, 3-(l-hydroxyethyl)-4-acetoxyazetidin-2-one and 3-(l-hydroxyethyl)-4-haloazetidin-2-one, which are both useful for preparing thienamycin known as a β-lactam antibiotics of the fourth generation, can be obtained by substitution reaction of the silylether group at the C4-position of the compound of the present invention.

There hitherto has been unknown the β-lactam the compound with a hydroxyethyl group at the C3-position, wherein hydroxyl group is protected by a dimethyl-l,l,2-trimethylpropylsilyl group, and a silylether group at the C4-postion. Also, there has been unknown a process for preparing the β-lactam compound having a hydroxyethyl group, wherein the hydroxyl group is protected by dimethyl-l,l,2-trimethylpropylsilyl group, at the C3-position and a silylether group at the C4-position. As a result of continuous efforts of the inventors, it has been found that the above β-lactam compound can be a useful intermediate for preparing carbapenem β-lactam compound and the desired β-lactam ring can be formed by a reaction of an enolsilylether and chlorosulfonylisocyanate in a high yield.

According to the present invention, there can be provided the β-lactam compound having the formula - (I):

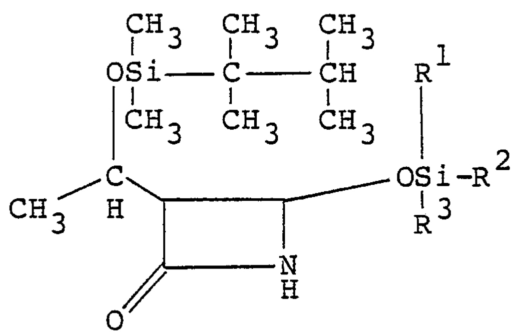

(I)

wherein $R^1$, $R^2$ and $R^3$ are a member selected from the group consisting of a lower alkyl group having l to 6 carbon atoms, phenyl group and an aralkyl group, and a process for preparing the same which comprises reacting an enolsilylether having the formula (II):

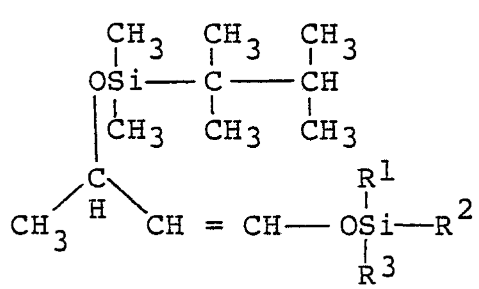

(II)

wherein $R^1$, $R^2$ and $R^3$ are as defined above, with chlorosulfonylisocyanate, and reducing the obtained product.

Also, the present invention can provide a process for readily preparing 4-acetoxy-3-[l-dimethyl-l,l,2-trimethylpropylsilyloxy]ethyl-azetidin-2-one having the formula (III):

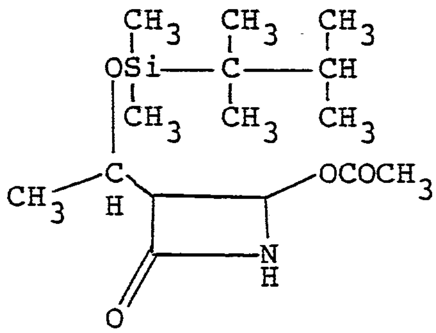

(III)

which comprises reacting a $\beta$-lactam compound having the formula (IV):

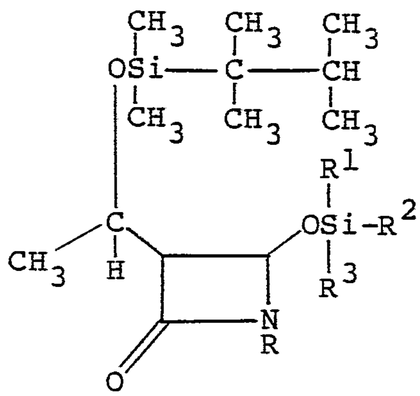

(IV)

wherein $R^1$, $R^2$ and $R^3$ are a member selected from the group consisting of a lower alkyl group having l to 6 carbon atoms, phenyl group or an aralkyl group, and R is a protective group for N, with acetic anhydride in an organic solvent in the presence of a base, and removing the protective group for N. The $\beta$-lactam compound having the formula (IV) is prepared by introducing a substituent group R at the N-position of the $\beta$-lactam compound (I).

In the above-mentioned formula (I), $Si(CH_3)_2C(CH_3)_2CH(CH_3)_2$ is a novel protective group for the hydroxyl group. It is advantageous to have the protective group since the protective group is stable in preparing the $\beta$-lactam compound (I), whereby the desired $\beta$-lactam compound can be stereoselectively obtained in a high yeild, and the protective group can be removed in an easier manner. In the formula (I), $R^1$, $R^2$ and $R^3$ are a member selected from the group consisting of a lower alkyl group having l to 6 carbon atoms such as methyl group, isopropyl group, tert-butyl group or l,l,2-trimethylpropyl group, phenyl group and benzyl group. And $R^1$, $R^2$ and $R^3$ may be the same or different with one another. It is preferred that all of $R^1$, $R^2$ and $R^3$ are methyl group, both of $R^1$ and $R^2$ are methyl group and $R^3$ is t-butyl group or l,l,2-trimethylpropyl group, or both $R^1$ and $R^2$ are phenyl group and $R^3$ is t-butyl group since, when such substituent groups are employed, the configuration at the C3-position and the C4-position on the desired $\beta$-lactam compound become the desirable trans-form and the configuration at the C3-position on the $\beta$-lactam ring is apt to become the desirable (R)-form.

With respect to a stereochemistry of the $\beta$-lactam compound having the formula (I), three asymmetric carbon atoms are present and thus eight kinds of stereoisomers can be produced. Especially, there is preferred a compound wherein the configuration is (R) at the C3-position, (R) at the C4-position, and (R) at the asymmetric carbon atom on the hydroxyethyl group protected by dimethyl l,l,2-trimethylpropylsilyl group.

The usefulness of the $\beta$-lactam compound of the present invention having a dimethyl-l,l,2-trimethylpropylsilyl group as a protective group for hydroxyl group being the side chain at the C3-position and having a silylether group at the C4-position is obvious since, as shown in Example 4, the $\beta$-lactam compound can be converted into a useful intermediate, 3(R)-(l-hydroxyethyl)-4(R)-acetoxyazetidin-2-one.

The process of the present invention is illustrated in the following scheme:

Scheme 1:

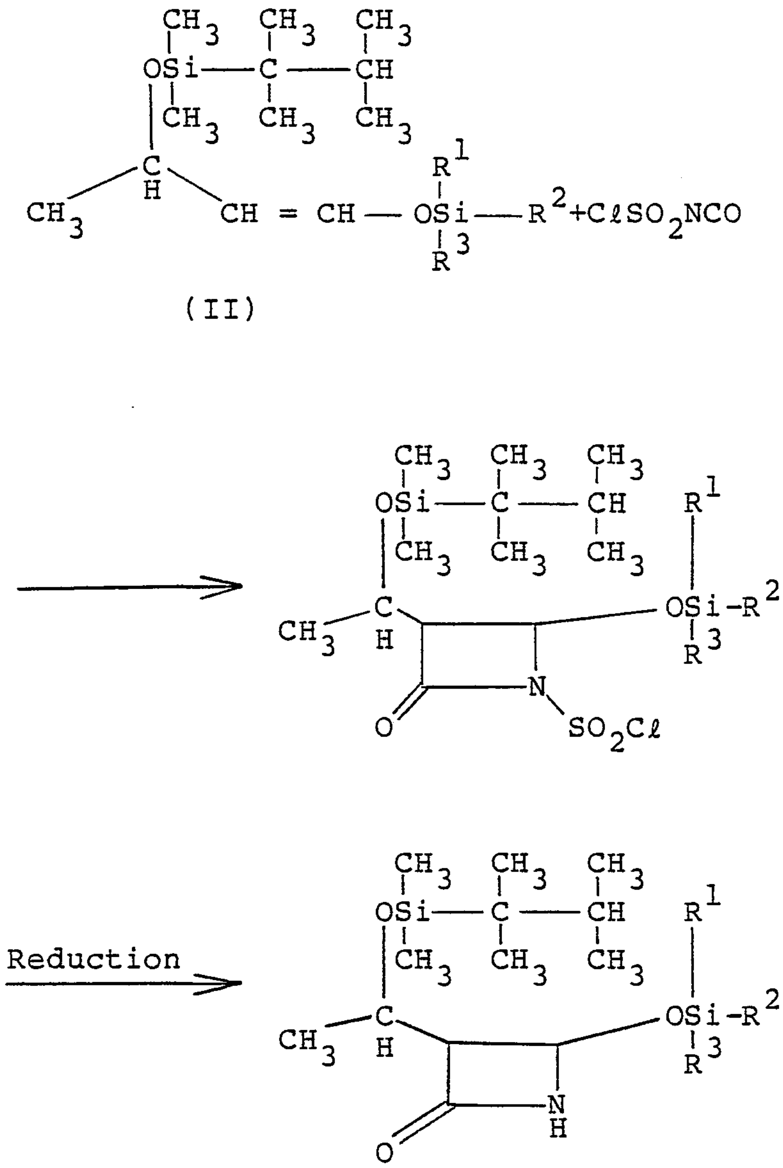


(II)

(I)

wherein $R^1$, $R^2$ and $R^3$ are as defined above.

Examples of the enolsilylether employed as a starting material in the reaction are, for instance, 3-dimethyl-l,l,2-trimethylpropylsilyloxybute-l-nyltrimethylsilyl ether, 3-dimethyl-l,l,2-trimethylpropylsilyloxybute-l-nyl-dimethylisobutylsilyl ether, 3-dimethyl-l,l,2-trimethylpropylsilyloxybute-l-nyl-tertbutyldimethylsilyl ether, 3-dimethyl-l,l,2-trimethyl propyl-silyloxybute-l-nyl-tert-butylmethylphenylsilyl ether, 3-dimehtyl-l,l,2-trimehtylpropylsilyloxy-bute-l-nyl-tert-butyldiphenylsilyl ether and 3-dimethyl-l,l,2-trimethylpropylsilyloxybute-l-nyl-dimethyl-l,l,2-trimethyl-propylsilyl ether. These materials can be prepared by the following scheme starting from 3-hydroxybutyric acid ester.

Scheme 2:

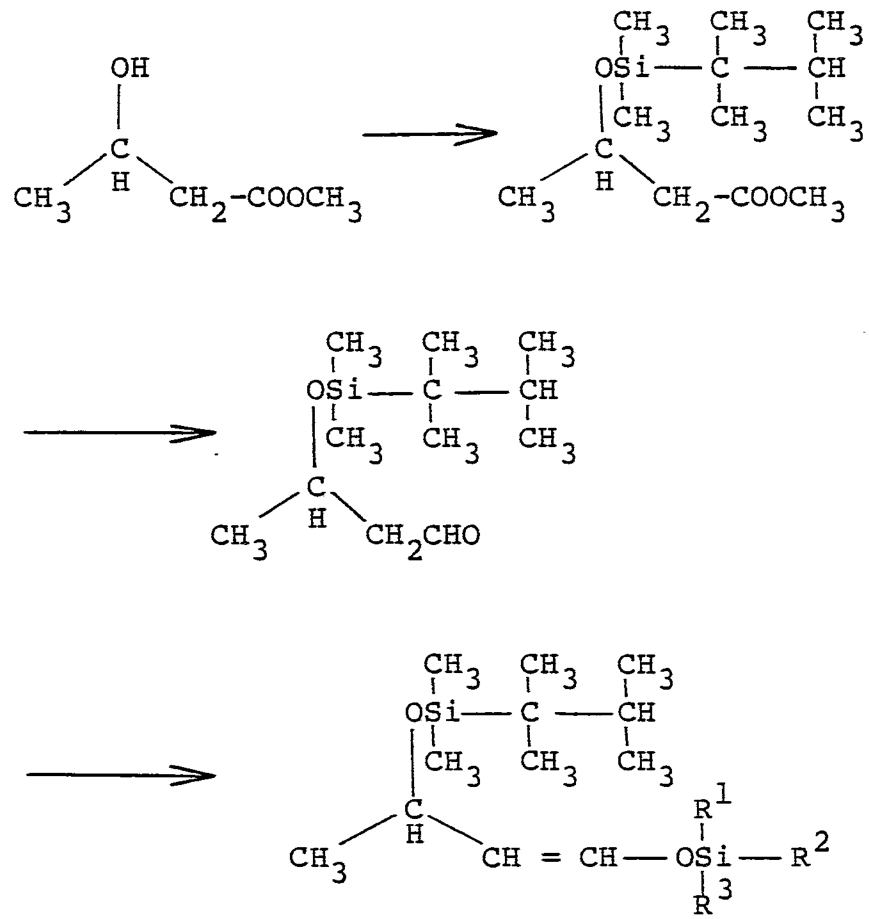

(II)

wherein $R^1$, $R^2$ and $R^3$ are as defined above.

The configuration of the hydroxyethyl group protected by dimethyl-l,l,2-trimethylpropylsilyl group being the side chain at the C3-position in the β-lactam compound (I) of the present invention is preferably (R). To obtain such a β-lactam compound, the reaction of the scheme I is carried out by employing an optically active enolsilylether compound which is obtained from an optically active 3(R)-hydroxybutyric acid ester.

The reaction of enolsilylether with chlorosulfonylisocyanate can be conducted either without any solvent or in the presence of an organic solvent which does not react with both chlorosulfonylisocyanate and enolsilylethers, e.g. methylene chloride, toluene, tetrahydrofuran, n-hexane and ethylether. The reaction temperature is from -70°C to around room temperature. Preferably, the reaction is carried out at a temperature of -50°C to 0°C, while controlling heat generation for instance, by adding dropwise chlorosulfonylisocyanate to an enolsilylether solution. The enolsilylether solution may be added dropwise to chlorosulfonylisocyanate or solution containing chlorosulfonylisocyanate. The enolsilylether and chlorosulfonylisocyanate are used in such an amount that the molar ratio of these materials is around l : l. The reaction time is selected from ten minutes to several hours.

The obtained β-lactam compound can be converted into the desired β-lactam compound by reducing the N-sulfonyl chloride group. Examples of the reducing agent used in the above reduction are, for instance, a metal hydride such as lithium aluminum hydride, sodium boron hydride or sodium bis(2-methoxyethoxy)-aluminum hydride, Raney nickel and the like. A thiol compound such as thiophenol or alkylmercaptan can also be used as a reducing agent. When a metal hydride such as lithium aluminum hydride or sodium bis-(2-methoxyethoxy) aluminum hydride is employed as the reducing agent, the reduction is carried out in an organic solvent such as tetrahydrofuran, toluene or ethylether. When a thiol compound is employed as the reducing agent, the reduction is carried out in the above organic solvent in which a base such as pyridine is co-existent. The reaction temperature of the reduction is in the range from -40°C to 0°C. Among the above reducing agents, sodium bis(2-methoxyethoxy)aluminum hydride is preferable.

After the reduction is completed, water is added to the reaction system. The desired β-lactam compound is extracted with an organic solvent such as ethylether or ethylacetate and dried with dehydrating agent such as magnesium sulfate. The solvent is distilled away under reduced pressure to give the β-lactam compound having l-(dimethyl-l,l,2-trimethylpropylsilyloxy)ethyl group at the C3-position and having a silylether group at the C4-position. If necessary, the thus obtained β-lactam compound can be isolated and purified by column chromatography.

The β-lactam compound of the formula (IV), which has a protective group for N, can be obtained by reaction of the β-lactam compound having the formula (I) and a reagent having the formula of R-X, wherein R is as above and X is a halogen. Examples of the reagent having the formula of R-X are, for instance, trialkyl-silyl halide such as t-butyldimethylsilyl chloride, isopropyldimethylsilyl chloride, isobutyldimethylsilyl chloride, trimethylsilyl chloride and dimethyl-l,l,2-trimethylpropylsilyl chloride, alkyloxyoxalyl chloride, aralkyloxyoxalyl chloride and allyloxyoxalyl chloride

such as 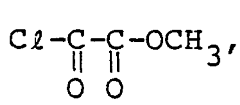, 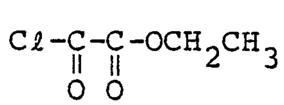, 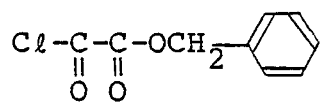,

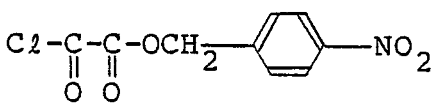 and 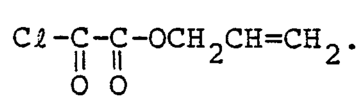.

Among them, t-butyldimethylsilyl chloride, whereby t-butyldimethylsilyl group is introduced as a protective group for N in the β-lactam compound (IV), is preferable.

Such an introduction of the protective group for N can be, for instance, carried out by subjecting to dehydrogen chloride reaction in reacting the compound (I) with the reagent of the formula of R-X in the presence of a base such as triethylamine or imidazole in a medium such as DMF (dimethylfolmamide) or methylene chloride, distilling away the medium, extracting the desired compound (IV) and distilling away the employed extraction solvent to give a pure compound (IV). Groups $R^1$, $R^2$ and $R^3$ of the β-lactam compound having the formula (IV) may be the same or different with each other, and selected from a lower alkyl group having l to 6 carbon atoms such as methyl, ethyl, isopropyl, isobutyl, tert-butyl or l,l,2-trimethylpropyl group, phenyl group, or an aralkyl group such as benzyl group, p-nitrobenzyl group. It is preferred all of $R^1$, $R^2$ and $R^3$ are methyl group.

The β-lactam compound, prepared as mentioned above, having the formula (IV):

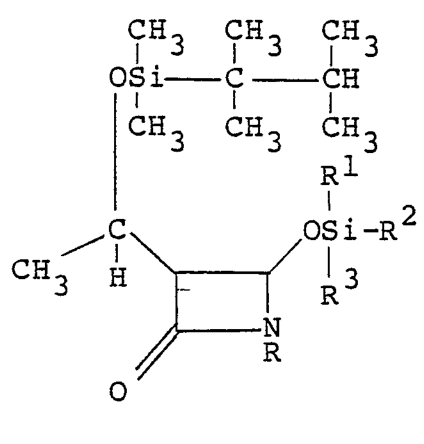

(IV)

wherein $R^1$, $R^2$, $R^3$ and R are as defined above, is reacted with acetic anhydride in an organic solvent in the presence of a base to convert the β-lactam compound (I) into the desired 4-acetoxy-3-[l-dimethyl-l,l,2-trimethylpropylsilyloxy]ethylazetidin-2-one derivative having the formula (V):

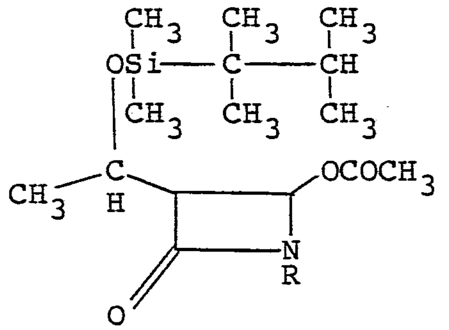

(V)

wherein R is as above. In the above reaction, the kinds of base and solvent employed and the reaction temperature affect the yield of the desired compound. A halogenated hydrocarbon or an aromatic hydrocarbon, preferably a halogenated hydrocarbon such as methylene chloride can be employed as a reaction solvent. The most preferable base is dimethylaminopyridine, which may also be used in combination with other bases such as pyridine, lutidine and picoline. The amount of the base employed is I to 5 times moles, preferably I to 3 times moles of the β-lactam compound having the formula (IV) and the amount of acetic anhydride employed as a reagent for introducing acetoxyl group is I to 20 times moles, preferably 3 to I5 times moles of the β-lactam compound.

The reaction is carried out in an organic solvent such as methylene chloride by adding dimethylaminopyridine and acetic anhydride to the β-lactam compound (I) having a silylether group at the C4-position, and by stirring the mixture at a temperature of -50°C to room temperature, preferably at a temperature of -30° to 5°C until the compound having the formula (IV) disappears. When another base such as pyridine or picoline is added in addition to dimethylaminopyridine, the yield is improved. After the reaction is completed, an extraction solvent such as methylene chloride or hexane is added to the reaction mixture, and thereto an aqueous solution of sodium hidrogen carbonate is added. Then the organic layer is separated from the reaction mixture, washed with water. After dehydration, the organic solvent is distilled away to give the N-protected β-lactam compound having an acetoxyl group at the C4-position. The obtained compound having the formula (V) is subjected to the next reaction where the N-protective group is removed. If desired, this compound (V) can be purified by means of silica-gel column chromatography.

When the N-protective group is removed, it is required that only N-protective group is selectively removed without removal of the O-protective group of hydroxyethyl group at the C3-position. For example, tetrabutylammonium fluoride or tetramethylammonium fluoride is preferably used when the N-protective group is an alkylsilyl group such as tert-butyldimethylsilyl group. A reagent obtained by combining a quarternary ammonium halide such as tetrabutylammonium chloride, tetrabutylammonium bromide, tetramethylammonium chloride or trimethylbenzylammonium chloride with potassium fluoride has an equivalent effect to tetrabutylammonium fluoride or tetramethylammonium fluoride. When methanol is used as the solvent, potassium fluoride alone can be employed as a reagent.

The solvent used in removing the N-protective group is preferably tetrahydrofuran, acetonitrile or methylene chloride and the reaction is smoothly proceeded by stirring at room temperature. It causes the improvement of the yield to carry out the above reaction in the presence of acetic acid. After the reaction is completed, a extraction solvent such as ethyl acetate is added to the reaction mixture, and thereto a dilute alkali solution is added. Then, the organic layer is extracted, washed. with water, dehydrated and dried, and finally the organic solvent is distilled away to give the desired compound of a 4-acetoxy-3-hydroxyethylazetidin-2-one derivative. The 4-acetoxy-3-hydroxyethylazetidin-2-one derivative can be purified by crystallization from n-hexane or petroleum ether, or by silica-gel column chromatography.

The present invention is more specifically described and explained by the following Example and Reference Example. However, it should be understood that the present invention is not limited to these Examples and various changes and modifications can be made without departing from the scope and spirit of the present invention.

Example I

[Preparation of (3R,4R,5R)-3-[l-(dimethyl-l,l,2-trimethylpropylsilyloxy)ethyl]-4-trimethylsilyloxyazetidin-2-one]

Two grams of (3R)-3-(dimethyl-l,l,2-trimethylpropylsilyloxy)bute-l-nyl trimethylsilyl ether (a mixture of the trans-form and the cis-form in ratio of 9 : l) was added to l0 mℓ of toluene, and thereto 0.64 mℓ of chlorosulfonylisocyanate was added over 20 minutes with stirring and cooling to -50°C under nitrogen gas. After the mixture was reacted for l hour at -50°C, a solution of l.6 g of $NaA\ell H_2(OCH_2CH_2OCH_3)_2$ dissolved in l0 mℓ of toluene was added thereto for l0 minutes at -55°C. Then, after stirring for 60 minutes, the reaction mixture was added to 50 mℓ of water and adjusted to pH 3 with sulfuric acid. The organic layer was separated and dried with magnesium sulfate. Then toluene was distilled away under reduced pressure to give l.73 g of a semisolid of the desired β-lactam containing (3R,4R,5R)-form and (3S,4S,5R)-form in a ratio of l0 : l.

The obtained β-lactam had the following properties.

(3R,4R,5R)-form

$^1$HNMR (90 MHz CDCℓ$_3$) δ(ppm)

0.02 (6H, s), 0.08 (9H, s), 0.72 (6H, s), 0.75 (6H, d), l.l2 (3H, d), l.5 (lH, m), 2.85 (lH, dd), 4.08 (lH, m), 5.28 (lH, d), 6.45 (NH, broad)

Example 2

[Preparation of (3R,4R,5R)-3-[l-dimethyl-l,l,2-trimethylpropysilyloxy)ethyl]-4-tert-butyldimethylsilyloxyazetidin-2-one]

Two grams of (3R)-3-(dimethyl-l,l,2-trimethylpropylsilyloxy)-bute-l-nyl-tert-butyldimethylsilyl ether (a mixture of the trans-from and the cis-form in a ratio of 3 : 2) was added to l0 mℓ of toluene and thereto 0.79 mℓ of chlorosulfonylisocyanate was added for 20 minutes with stirring and cooling to -50°C under nitrogen gas. After the mixture was reacted for l hour at -50°C, a solution of l.97 g of $NaA\ell H_2(OCH_2CH_2OCH_3)_2$ dissolved in l0 mℓ of toluene was added thereto for l0 minutes at -55°C. Then, after stirring for 60 minutes, the reaction mixture was added to 50 mℓ of water and adjusted to pH 3 with sulfuric acid. The organic layer was separated and dried with mangesium sulfate. Then toluene was distilled away under reduced pressure to give 2.l3 g of a semi-solid of the desired β-lactam containing (3R,4R,5R)-form and (3S,4S,5R)-form in a ratio of 3 : 2. The obtained β-lactam had the following properties.

(3R,4R,5R)-from

$^1$HNMR (90 MHz, CDCℓ$_3$) δ(ppm)

0.02 (6H, s), 0.08 (6H, s), 0.72 (6H, s), 0.75 (6H, d), 0.90 (9H, s), l.l3 (3H, d), l.5 (lH, m), 2.87 (lH, dd), 4.l0 (lH, m), 5.30 (lH, d), 6.50 (NH, broad)

Example 3

[Preparation of (3R,4R,5R)-3-[l-(dimethyl-l,l,2-trimethylpropylsilyloxy)ethyl]-4-dimethylisopropylsilyloxyazetidin-2-one]

Two grams of (3R)-3-(dimethyl-l,l,2-trimethylpropylsilyloxy)-bute-l-nyl-dimethylisopropylsilyl ether (a mixture of the trans-form and the cis-form in a ratio of 5 : l) was added to l0 mℓ of toluene and thereto 0.7 mℓ of chlorosulfonylisocyanate was added over 20 minutes with stirring and cooling to -50°C under nitrogen gas. After the mixture was reacted for l hour at -50°C, a solution of 2.l5 g of $NaA\ell H_2(OCH_2CH_2OCH_3)_2$ dissolved in l0 mℓ of toluene was added thereto over l0 minutes at -55°C. Then, after stirring for 60 minutes, the reaction mixture was added to 50 mℓ of water and adjusted to pH 3 with sulfuric acid. The organic layer was separated and dried with mangesium sulfate. Then toluene was distilled away under reduced pressure to give l.95 g of a crude product as an oil. The obtained β-lactam has the following properties.

(3R,4R,5R)-form

$^1$HNMR (90 MHz, CDCℓ$_3$) δ (ppm)

0.02 (6H, s), 0.07 (6H, s), 0.72 (6H, s), 0.75 (6H, d), 0.9l (7H), l.l2 (3H, d), l.5l, (lH, m), 2.85 (lH, dd), 4.07 (lH, m), 5.27 (lH, d), 6.46 (NH, broad)

Example 4

[Preparation of (3R,4R)-4-acetoxy-3-[(R)-l-(dimethyl-l,l,2-trimethylpropylsilyloxy)ethyl]-azetidin-2-one]

There was dissolved 0.98 g of (3R,4R)-3-[l-(dimethyl-l,l,2-trimethylpropylsilyloxy)ethyl]-4-trimethylsilyloxy-azetidin-2-one in 5 mℓ of methylene chloride and thereto 0.58 g of triethylamine and 0.66 g of dimethyl-l,l,2-trimethylpropylsilyl chloride were added and the mixture was stirred for 9 hours at room temperature. After completion of the reaction, the resultant mixture was washed with an aqueous solution of hydrochloric acid of pH 4 and the solvent was distilled away under reduced pressure to give l.28 g of liquid crude product. There was added l.27 g of the obtained liquid to 6 mℓ of methylene chloride, and thereto 0.95 g of dimethylaminopyridine and l.59 g of acetic anhydride were further added and the mixture was reacted for 46 hours at -l5°C. After the solution was washed with 5 % aqueous solution of $NaHCO_3$ and then water, the organic layer was separated and the solvent was distilled away under reduced pressure to give l.27 g of liquid crude product. There was dissolved l.l9 g of the obtained liquid in 6 mℓ of methylene chloride, and to which 0.6 g of tetramethylammonium chloride and 0.3 g of potassium fluoride and 0.68 g of acetic acid were added and stirred for 2 hours at room temperature. After completion of reaction, the resultant mixture was washed with 5 % aqueous solution of $NaHCO_3$ and then water, and the organic layer was separated and was condensed under reduced pressure to give 0.7 g of a solid crude product. Then, the obtained solid was recrystallized from hexane to give 0.35 g of the desired β-lactam as a solid.

The obtained β-lactam had the following properties.

mp: 80° to 8l°C

$[\alpha]_D^{25}$ = +4l.6° (c=0.5, $CHC\ell_3$)

$^1$HNMR (90 MHz, $CDC\ell_3$) δ (ppm)

0.08 (6H, s), 0.65 (6H, s), 0.75 (6H, d), l.l5 (3H, d), l.40 (lH, m), 2.08 (3H, s), 3.00 (lH, dd), 4.l0 (lH, m), 5.7l (lH, d), 6.60 (NH)

Reference Example l

[Preparation of (3R)-3-(dimethyl-l,l,2-trimethylpropylsilyloxy)-bute-l-nyl-trimethylsilyl ether]

There was added 3.8 g of (3R)-3-dimethyl-l,l,2-trimethylpropylsilyloxybutyl aldehyde to 20 mℓ of methylene chloride, 3.34 g of triethylamine and 4 mℓ of trimethylsilyl chloride were added to the above solution, and the mixture was refluxed for 24 hours. After completion of the reaction, the resultant mixture was washed with aqueous solution of hydrochloric acid of pH 4 and then water, and the solvent was distilled away to give 4.82 g of a crude product. The crude product was distilled under reduced pressure to give 3.5 g of the desired product (bp 98°C/2 mmHg). The obtained product was a mixture of the trans-form and the cis-form in a ratio of l0 : l. The obtained β-lactam had the following properties.

$[\alpha]_D^{25}$ = -6.4° (c=l, $CC\ell_4$)

$^1$HNMR (90 MHz, $CDC\ell_3$)(Trans-form) δ(ppm)

0.0l (6H, s), 0.l0 (9H, s), 0.75 (6H, s), 0.78 (6H, d), l.l0 (3H, d), l.5 (lH, m), 4.l5 (lH, m), 4.95 (lH, dd), 6.25 (lH, d)

## Claims

l. A β-lactam compound having the formula (I):

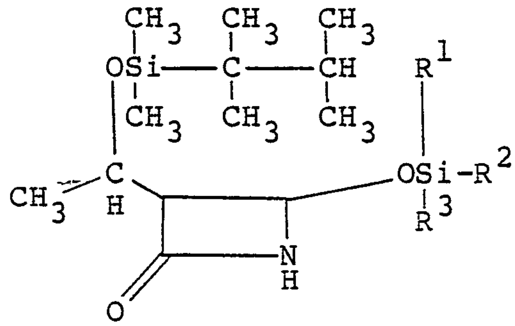

(I)

wherein $R^1$, $R^2$ and $R^3$ are a member selected from the group consisting of a lower alkyl group having l to 6 carbon atoms, phenyl group and an aralkyl group.

2. A process for preparing a $\beta$-lactam compound having the formula (I):

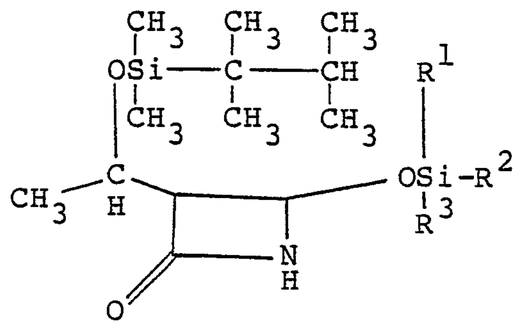

(I)

wherein $R^1$, $R^2$ and $R^3$ are a member selected from the group consisting of a lower alkyl group of having l to 6 carbon atoms, phenyl group and an aralkyl group, which comprises reacting an enolsilylether having the formula

(II):

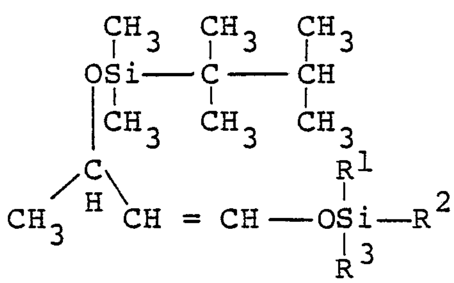

(II)

wherein $R^1$, $R^2$ and $R^3$ are as defined above, with chlorosulfonylisocyanate and reducing the obtained product.

3. The process of Claim 2, wherein a reducing agent is employed and is sodium bis(2-methoxyethoxy)-aluminum hydride.

4. The process of Claim 2, wherein a reducing agent is employed and is lithium aluminum hydride.

5. A process for preparing 4-acetoxy-3-[l-dimethyl-l,l,2-trimethylpropyl-silyloxy]ethyl-azetidin-2-one having the formula (III):

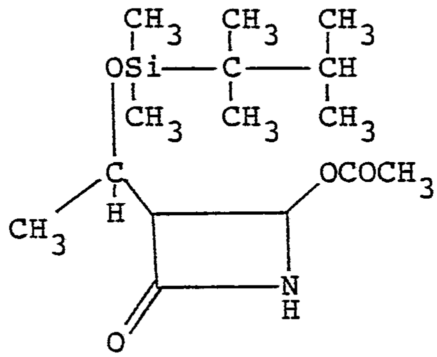

(III)

, which comprises reacting a β-lactam compound having the formula (IV):

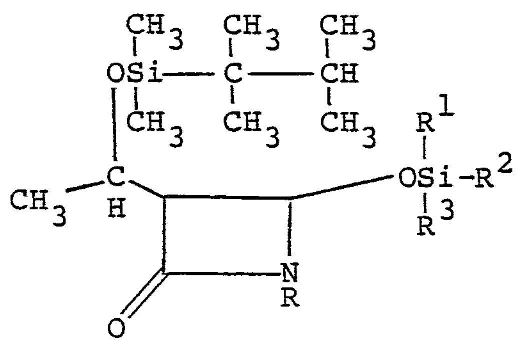

(IV)

wherein $R^1$, $R^2$ and $R^3$ are a member selected from the group consisting of a lower alkyl group having I to 6 carbon atoms, phenyl group or an aralkyl group and R is a protective group for N, with acetic anhydride in an organic solvent in the presence of a base, and removing the protective group for N.

6. The process of Claim 5, wherein the β-lactam compound (IV) is prepared by reacting the compound (I) with the reagent having the formula R-X, wherein R is as defined above and X is a halogen atom.

European Patent Office

# EUROPEAN SEARCH REPORT

Application number

EP 87 10 0298

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
| --- | --- | --- | --- |
| Y | EP-A-0 167 154 (KANEGAFUCHI KAGAKU KOGYO K.K.)<br>* Claims *<br>--- | 5,6 | C 07 F 7/18 |
| Y | EP-A-0 167 155 (KANEGAFUCHI KAGAKU KOGYO K.K.)<br>* Claims *<br>--- | 1-4 | |
| A | TETRAHEDRON LETTERS, vol. 26, no. 45, 1985, pages 5515-5518, Pergamon Press Ltd, GB; H. WETTER et al.: "Thexyldimethylsilyl chloride 1, an easily accessible reagent for the protection of alcohols"<br>* Whole article, especially page 5518, formule 12 *<br>--- | 1 | TECHNICAL FIELDS SEARCHED (Int. Cl.4) |
| P,A | EP-A-0 181 831 (CIBA-GEIGY)<br>* Page 34, example 24; claims 1,7 *<br>----- | 1,5 | C 07 F 7/00<br>C 07 D 205/00 |

The present search report has been drawn up for all claims

| Place of search | Date of completion of the search | Examiner |
| --- | --- | --- |
| THE HAGUE | 25-03-1987 | CHOULY J. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document